# FASCICULE DE BREVET EUROPEEN

(11) **EP 4 220 008 B1**
(45) Date de publication et mention de la délivrance du brevet: **20.08.2025**
(21) Numéro de dépôt: 23152746.6
(22) Date de dépôt: 20.01.2023
(51) Int. Cl.: B60Q 1/26, F21S 43/15, F21S 43/19, B60Q 1/00

(54) **PANNEAU DE VÉHICULE AUTOMOBILE INTÉGRANT UN ÉLÉMENT LUMINEUX**
KRAFTFAHRZEUGPANEEL MIT INTEGRIERTEM LEUCHTELEMENT
MOTOR VEHICLE PANEL INCORPORATING A LIGHT ELEMENT

(30) Priorité: 28.01.2022 FR 2200730
(43) Date de publication de la demande: 02.08.2023
(73) Titulaire: Renault s.a.s, 92100 Boulogne Billancourt (FR)
(72) Inventeur: CALAIS, Valère, 78280 GUYANCOURT (FR); PHILIPPS, Mathieu, 78280 GUYANCOURT (FR)

(56) Documents cités:
- EP-A1- 3 623 227
- WO-A1-2020/229344
- DE-A1- 102018 211 056
- FR-A1- 3 051 412
- FR-B1- 3 058 776
- JP-A- 2019 209 913
- US-A1- 2019 061 615

## Description

L'invention se rapporte à un panneau de véhicule automobile intégrant un élément lumineux.

Usuellement, les dispositifs d'éclairage des véhicules automobiles sont indépendants de la carrosserie. Ils comprennent le plus souvent un boitier muni d'une glace transparente ou translucide contenant une source lumineuse et un élément optique. De tels dispositifs sont toutefois contraignants car ils sont relativement volumineux, et par conséquent, mal aisés à monter.

Dans ce contexte, les documents FR3021925 et FR3058776B1 présentent des panneaux de carrosserie à éclairage interne intégré comprenant une peau translucide ou transparente autorisant le passage de la lumière et un dispositif d'éclairage assemblé contre la face interne de cette peau.

Le dispositif d'éclairage comprend une source lumineuse installée à l'intérieur d'un boitier opaque qui présente une ouverture apte à autoriser le passage de la lumière. Ce boitier peut être assimilé à un guide de lumière puisqu'il permet d'orienter et de guider les rayons lumineux, à partir de la source lumineuse, dans la direction souhaitée hors du boitier opaque.

Cet agencement nécessite une certaine étanchéité entre la face interne de la peau et le boîtier afin d'éviter toute infiltration d'eau et toute pénétration de poussières à l'intérieur du boîtier.

De plus, il existe aussi un besoin de simplifier l'outillage utilisé pour la réalisation de ces éléments ainsi que de permettre une réparation plus simple de ceux-ci notamment pour le remplacement de la source lumineuse.

Autrement dit, un problème qui se pose et que vise à résoudre la présente invention est de fournir un panneau intégrant un élément lumineux plus simple à mettre en œuvre et qui puisse conserver toute son intégrité dans le temps.

Dans ce but, il est proposé un panneau intégrant un élément lumineux de véhicule automobile, comprenant : une peau présentant une face externe orientée vers l'extérieur du véhicule et une face interne opposée orientée vers l'intérieur du véhicule, ladite peau comportant au moins une fenêtre autorisant le passage de la lumière ; et une source lumineuse apte à émettre des rayons lumineux et un dispositif de fixation de ladite source lumineuse, ledit dispositif de fixation prenant appui contre ladite face interne pour maintenir ladite source lumineuse sensiblement en regard de ladite fenêtre. Selon l'invention, le dispositif de fixation comprend en outre une portion transparente, s'étendant de ladite source lumineuse jusqu'à ladite peau et traversant ladite fenêtre.

Un avantage de l'invention est de pouvoir assurer l'étanchéité entre la portion transparente et la source lumineuse pour pouvoir guider les rayons lumineux de ladite source lumineuse vers l'extérieur du véhicule automobile sans perturbation à l'interface, notamment en raison du matériau diffusant, de type silicone, utilisé pour la source lumineuse

Avantageusement et de manière non limitative, le dispositif de fixation et ladite portion transparente sont formés d'une seule pièce. Comme on l'expliquera plus en détail dans la suite de la description, le dispositif de fixation requiert la mise en œuvre de deux matériaux polymère. Ces matériaux sont alors co-injectés dans un même moule. Et grâce à la forme du dispositif de fixation selon l'invention, les outillages requis et installés dans le moule sont plus simples.

En outre la réalisation du dispositif de fixation lui-même et du guide de lumière est plus simple.

Selon l'invention, le dispositif de fixation comprend des pattes de fixation situées de part et d'autre de la source lumineuse.

Un avantage est alors de pouvoir fixer aisément le dispositif de fixation sur la face interne de la peau, car les pattes de fixation peuvent venir en appui à plat contre la face interne.

Au surplus, la mise en œuvre de pattes de fixation à distance les unes des autres, comparativement à la mise en œuvre d'une aile continue, permet de réserver une certaine flexibilité au dispositif de fixation selon un plan correspondant sensiblement au plan défini par les pattes de fixation, comme on l'expliquera dans la suite de la description.

Selon l'invention, le dispositif de fixation comprend des clips de maintien apte à maintenir la source de lumière contre la portion transparente.

Un avantage de l'invention est de maintenir la source lumineuse contre la portion transparente pour assurer l'absence d'air entre les deux et ainsi éviter la pénétration des poussières et de l'eau.

Selon l'invention, les pattes de fixation et les clips de maintien sont répartis alternativement sur toute la longueur de la source lumineuse.

Ainsi, les pattes de fixation et les clips de maintien ne courent pas sur toute la longueur, et par conséquent on augmente alors la flexibilité de l'ensemble. De plus, cette alternance permet aussi une optimisation du procédé en permettant un démoulage dans une seule direction et donc limitant le nombre de mouvements internes dans le moule.

Avantageusement et de manière non limitative, lesdits clips de maintien présentant un retour muni d'un ergot d'accrochage permettant de s'emboiter dans une fente portée par une partie fixe.

Cette configuration permet de faciliter l'assemblage dans les usines de production et également, de pouvoir réparer plus aisément la source lumineuse puisque le dispositif de maintien peut être retiré facilement.

Avantageusement et de manière non limitative, les pattes de fixation sont collées à la peau au moyen d'un adhésif.

Avantageusement et de manière non limitative, les pattes de fixation sont soudées à la peau.

L'invention concerne aussi un véhicule automobile comprenant le panneau tel que décrit précédemment.

D'autres particularités et avantages de l'invention ressortiront à la lecture de la description faite ci-après de plusieurs modes de réalisation particuliers de l'invention, donnés à titre indicatif mais non limitatif, en référence aux dessins annexés sur lesquels :
- [Fig. 1] est une vue schématique partielle en perspective arrière du panneau intégrant un élément lumineux selon l'invention et dans un premier état ;
- [Fig. 2] est une vue schématique partielle en coupe du panneau intégrant un élément lumineux illustré sur la [Fig. 1] selon le plan II - II ; et,
- [Fig. 3] est une vue schématique partielle en coupe du panneau intégrant un élément lumineux illustré sur la [Fig. 2] dans un second état.

L'invention concerne un panneau intégrant un élément lumineux de véhicule automobile.

Usuellement, les véhicules automobiles comprennent différents panneaux intégrant des éléments lumineux permettant non seulement d'éclairer l'environnement autour du véhicule, mais aussi pour que le véhicule soit visible des autres automobilistes.

Les panneaux intégrant des éléments lumineux sont le plus souvent installés à l'avant et à l'arrière du véhicule et de part et d'autre de celui-ci.

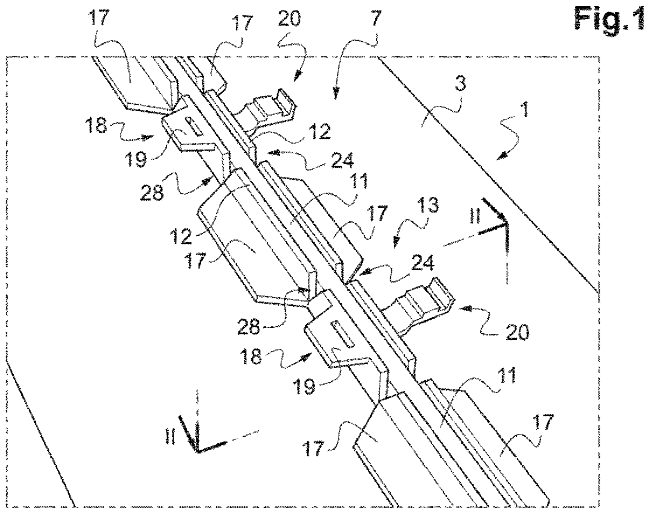

La [Fig. 1] illustre partiellement en perspective et vu de l'arrière, un panneau 1 comprenant une peau 3 et un dispositif de fixation 13 présentant une section droite générale en U pour recevoir une source lumineuse 11 comme on l'expliquera ci-après.

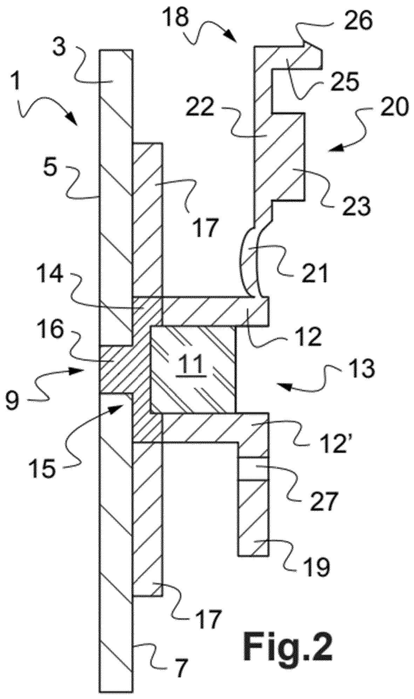

On se référera à la [Fig. 2] afin de décrire en détail le dispositif de fixation 13, suivant le plan de coupe II-II, avant de revenir sur la [Fig. 1].

Ainsi, on retrouve sur la [Fig. 2], d'une part la peau 3 et le dispositif de fixation 13 coopérant l'un avec l'autre et d'autre part, la source lumineuse 11 engagée dans le dispositif de fixation 13.

Le dispositif de fixation 13 présente un fond 14 et deux ailes en regard 12, 12'. La hauteur des ailes est sensiblement supérieure à la largeur du fond 14.

Le dispositif de fixation 13 comprend en outre une nervure 16 s'étendant en saillie du fond à l'opposé des ailes 12, 12' par rapport au fond 14. La nervure 16 s'étend sensiblement à équidistance des deux plans moyens définis par les deux ailes en regard 12, 12'. Au surplus, elle présente une largeur voisine de l'épaisseur des deux ailes 12, 12'. La largeur de la nervure 16 correspond à la largeur lumineuse visible du client.

La nervure 16 et le fond 14 forme une même portion 15 du dispositif de fixation 13, laquelle portion est transparente pour pouvoir autoriser le passage de la lumière.

La portion 15 et les deux ailes opposées 12, 12' du dispositif de fixation 13 sont formées d'une seule pièce. Toutefois, la portion 15 est constituée d'un matériau transparent pour autoriser précisément le passage de la lumière, tandis que le complément et notamment les deux ailes opposées 12, 12' sont constitués d'un matériau opaque.

Le matériau transparent est par exemple le polycarbonate. Ce polymère présente l'avantage d'être flexible ainsi que de pouvoir être co-moulé avec d'autres polymères, et en particulier, le matériau opaque, qui peut-être du PMMA.

Au surplus, la nervure 16 et le fond 14 sont enduits d'une couche de vernis pour les protéger des rayures voire des UV lors de l'assemblage comme expliqué ci-après.

Ainsi, la portion complémentaire de la portion 15, soit de la nervure 16 et du fond 14, est co-moulée dans un polymère opaque comme par exemple le Polyphénylène Ether (PPE), l'Acrylonitrile butadiène styrène (ABS) ou encore le polypropylène (PP).

Ainsi, les deux portions sont co-moulées pour ne former qu'une seule pièce.

Le co-moulage se fait donc par injection successifs de deux matériaux autrement appelé injection 2K. L'injection bi-matière est un procédé permettant l'association de deux matériaux polymères sans pour autant que ces deux matériaux se mélangent l'un dans l'autre.

Les deux polymères sont injectés quasi-simultanément dans le moule. Il faut donc un moule spécifique permettant de créer un espace supplémentaire pour accueillir le polymère supplémentaire. Cette technique permet la simplification des outillages utilisés puisqu'un seul moule est nécessaire pour réaliser la pièce.

Le dispositif de fixation 13 comprend par ailleurs une pluralité de paires de pattes de fixations 17 espacées les unes des autres, comme illustré sur la [Fig. 1]. Les pattes de fixation 17 de chacune des paires sont situées de part et d'autre du fond 14 de la section en U. Les pattes de fixation 17 s'étendent latéralement dans le prolongement du fond 14 de la section en U.

En outre, le dispositif de fixation 13 comprend une pluralité de clips de maintien 18 respectivement situés entre les paires de pattes de fixation 17. Les clips de maintien 18 sont composés de deux parties : une partie fixe 19 attenante à l'une des ailes 12' et une partie mobile 20 attenante à l'autre aile 12 et s'étendant au droit de la partie fixe 19.

La partie mobile 20 comporte un organe de verrouillage 22 relié par une charnière 21 à ladite autre aile 12 de la section en U. A l'extrémité de l'organe de verrouillage 22, la partie mobile 20 comprend un retour 25 présentant un ergot d'accrochage 26 permettant de verrouiller le clip de maintien 18 comme on l'expliquera ci-après.

Ensuite entre la charnière 21 et le retour 25, la partie mobile 20 comprend une surépaisseur 23, sous la forme d'un pavé droit en saillie, dont la largeur selon une composante s'étendant de la charnière 21 vers le retour 25 est égale à la largeur de l'espace s'étendant entre les deux ailes 12, 12'.

Par ailleurs, la charnière 21, en forme de croissant de lune, est non seulement mobile par rapport à ladite autre aile 12, mais elle est aussi déformable comme on va l'expliquer ci-après.

À l'opposé, la partie fixe 19 s'étend dans un sens opposé à la partie mobile 20. La partie fixe 19 comprend une fente 27 sensiblement parallèle à ladite aile 12' et dans laquelle le retour 25 est apte venir s'engager comme on l'expliquera dans la suite la description.

Le dispositif de fixation 13 tel que décrit ci-dessus est compris dans le panneau 1, lequel comprend également la peau 3. Cette dernière présente une face externe 5 orientée vers l'extérieur du véhicule et une face interne 7 orientée vers l'intérieur du véhicule. Le panneau 1 présente en outre une fenêtre 9.

Ainsi, tel qu'illustré sur la [Fig. 2], la nervure 16 de la portion transparente 15 est engagée à travers la fenêtre 9 et vient à l'affleurement de la face externe 5 de la peau 3, tandis que les paires de pattes 17 sont en applique à plat sur la face interne 7 de la peau 3.

On observera que la nervure 16 présente une largeur égale à la largeur de la lumière la fenêtre 9 de manière à pouvoir assurer une continuité de la surface externe 5 au droit de la fenêtre 9.

On se référera de nouveau à la [Fig. 1] où le dispositif de fixation 13 est en applique sur la face interne 7 de la peau 3. La fixation des pattes 17 à plat sur la peau 3 peut s'effectuer de plusieurs manières. Selon, une première alternative, la fixation est réalisée au moyen d'un adhésif.

Selon une autre alternative, la fixation s'effectue par soudure à chaud, et préférentiellement par ultrason.

La soudure par ultrason consiste à faire vibrer à haute fréquence les deux pièces en appui l'une contre l'autre grâce à un sabot équipé d'un transducteur, ou sonotrode. La soudure s'effectue alors grâce à la chaleur engendrée par les vibrations à l'interface entre les deux pièces.

Toujours en référence à la [Fig. 1], et comme indiqué plus haut, les clips de maintien 18 et les paires de pattes de fixation 17 sont répartis alternativement sur toute la longueur du dispositif de fixation 13. La nervure 16 et le fond 14 du dispositif de fixation 13, quant à eux, sont continus sur toute la longueur du dispositif tout comme la fenêtre 9.

De plus, entre chaque clip de maintien 18 et paire de pattes de fixation 17, le dispositif de fixation 13 comprend avantageusement des paires d'encoches en regard 24, 28 pratiqués respectivement dans les ailes 12, 12'. Elles s'étendent ainsi perpendiculairement à la peau 3.

Cet agencement permet ainsi d'avoir une certaine flexibilité de la structure, notamment dans les directions perpendiculaires à la peau 3, pour absorber les variations dans la découpe, ou pour absorber les petits chocs. Cet agencement permet également de mieux s'adapter à la courbure de la peau 3.

Enfin, le panneau 1 comprend la source lumineuse 11 destinée à être engagée dans la section en U du dispositif de fixation 13 sans jeu. La source lumineuse 11 comporte des LED moulés dans une tige de section carrée dans un matériau polymère.

Comme illustré sur la [Fig. 2], la source lumineuse 11 est engagée à l'intérieur de la section en U du dispositif de fixation 13. Elle s'étend dans tout l'espace défini par cette section en U à l'exception de la bordure supérieure des deux ailes 12, 12'. La source lumineuse 11 est alors en appui contre le fond 14 à l'opposé de la nervure 16.

La portion transparente 15 s'étend ainsi de la source lumineuse 11 à la peau 3 en traversant la fenêtre 9 sans discontinuité. Elle permet ainsi de guider les rayons lumineux de la source lumineuse 11 vers l'extérieur du véhicule.

La source lumineuse 11 est alors maintenue en position fixe dans le dispositif de fixation 13 en rabattant la partie mobile 20 du clip de maintien.

La surépaisseur 23, ou pavé droit, vient s'engager alors à l'intérieur de la section en U pour s'appliquer contre la source lumineuse 11, tandis que la charnière 21 se referme sur elle-même et se comprime.

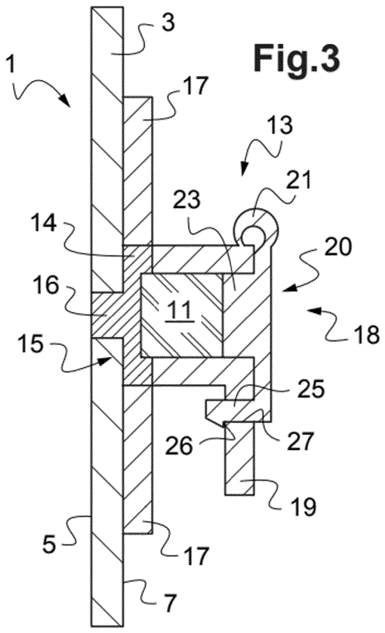

En poursuivant le mouvement, le retour 25 de la partie mobile 20 vient s'engager à travers la fente 27 de la partie fixe 19. Et en appuyant à force sur la partie mobile 20 contre la partie fixe 19, l'ergot d'accrochage 26 vient s'étendre élastiquement en retour contre la face opposée la partie fixe 19. Le retour 25 est alors verrouillé à l'intérieur de la fente 27, comme l'illustre la [Fig. 3] à laquelle on se référera.

Ainsi, la surépaisseur 23, ou pavé droit, exerce une pression sur la source lumineuse 11 lorsque le clip de maintien 18 est verrouillé. La source lumineuse 11 est donc en applique à force contre la portion transparente 15 sans espace entre les deux.

Ainsi, cet agencement maintien la source lumineuse 11 contre la portion transparente 15 pour assurer l'absence d'air entre les deux et ainsi éviter la pénétration des poussières et/ou de l'eau.

On comprend alors que tous les clips de maintien 18 de ladite pluralité de clip de maintien, peuvent être ainsi en position de verrouillage pour maintenir la source lumineuse 11 en position fixe à l'intérieur de la section en U.

Cet agencement permet également d'insérer et de retirer facilement et rapidement la source lumineuse 11 lors de la fabrication ou de la réparation du panneau 1.

La [Fig. 3] illustre ainsi le panneau 1 lorsque le clip de maintien 13 est verrouillé permettant ainsi de maintenir la source lumineuse 11 comme expliqué précédemment.

De la sorte, lorsque la source lumineuse 11 est en fonctionnement, autrement dit lorsqu'elle émet de la lumière, cette lumière se propage dans le fond 14 et la nervure 16 sans pertes à l'interface.

Ainsi, le fond 14 et la nervure 16 formant la portion transparente 15, permettent de guider la lumière provenant de la source lumineuse 11 et de la propager à l'extérieur du véhicule.

## Revendications

1. Panneau (1) de véhicule automobile intégrant un élément lumineux, comprenant :
- une peau (3) présentant une face externe (5) orientée vers l'extérieur du véhicule et une face interne (7) opposée orientée vers l'intérieur du véhicule, ladite peau (3) comportant au moins une fenêtre (9) autorisant le passage de la lumière ;
- une source lumineuse (11) apte à émettre des rayons lumineux et un dispositif de fixation de ladite source lumineuse (11), ledit dispositif de fixation (13) prenant appui contre ladite face interne (7) pour maintenir ladite source lumineuse (11) sensiblement en regard de ladite fenêtre (9),-ledit dispositif de fixation (13) comprenant en outre une portion transparente (15) pleine, s'étendant de ladite source lumineuse (11) jusqu'à ladite peau (3) et traversant ladite fenêtre (9), le dispositif de fixation (13) comprenant en outre des pattes de fixation (17) situées de part et d'autre de la source lumineuse (11), **caractérisé en ce que** le dispositif de fixation comprend des clips de maintien (18) aptes à maintenir la source lumineuse (11) contre la portion transparente (15) et **en ce que** les pattes de fixation (17) et les clips de maintien (18) sont répartis alternativement sur toute la longueur de la source lumineuse (11).

2. Panneau (1) selon la revendication 1, **caractérisé en ce que** le dispositif de fixation (13) et la portion transparente (15) sont formés d'une seule pièce.

3. Panneau (1) selon l'une des revendications 1 ou 2, **caractérisé en ce que** lesdits clips de maintien (18) présentent une partie mobile (20) comportant un retour (25) muni d'un ergot d'accrochage (26) permettant de s'emboiter dans une fente (27) portée par une partie fixe (19).

4. Panneau (1) selon l'une des revendications précédentes, **caractérisé en ce que** les pattes de fixation (17) sont collées à la peau (3) au moyen d'un adhésif.

5. Panneau (1) selon l'une des revendications précédentes, **caractérisé en ce que** les pattes de fixation (17) sont soudées à la peau (3).

6. Véhicule automobile comprenant le panneau (1) intégrant un élément lumineux selon les revendications 1 à 5.

## Patentansprüche

1. Kraftfahrzeugpaneel (1) mit einem integrierten Leuchtelement, umfassend:
- eine Haut (3), die eine zur Außenseite des Fahrzeugs hin gerichtete Außenseite (5) und eine zur Innenseite des Fahrzeugs hin gerichtete Innenseite (7) aufweist, wobei die Haut (3) mindestens ein Fenster (9) beinhaltet, das den Durchgang des Lichts zulässt;
- eine Lichtquelle (11), die geeignet ist, Lichtstrahlen auszusenden, und eine Befestigungsvorrichtung zur Befestigung der Lichtquelle (11), wobei die Befestigungsvorrichtung (13) an der Innenseite (7) anliegt, um die Lichtquelle (11) im Wesentlichen gegenüber dem Fenster (9) zu halten, wobei die Befestigungsvorrichtung (13) ferner einen durchgehenden transparenten Abschnitt (15) umfasst, der sich von der Lichtquelle (11) bis zu der Haut (3) erstreckt und das Fenster (9) durchquert, wobei die Befestigungsvorrichtung (13) ferner Befestigungslaschen (17) umfasst, die beidseits der Lichtquelle (11) gelegen sind, **dadurch gekennzeichnet, dass** die Befestigungsvorrichtung Halteclipse (18) umfasst, die geeignet sind, die Lichtquelle (11) an dem transparenten Abschnitt (15) zu halten, und dadurch, dass die Befestigungslaschen (17) und die Halteclipse (18) abwechselnd über die gesamte Länge der Lichtquelle (11) verteilt sind.

2. Paneel (1) nach Anspruch 1, **dadurch gekennzeichnet, dass** die Befestigungsvorrichtung (13) und der transparente Abschnitt (15) aus einem einzigen Stück gebildet sind.

3. Paneel (1) nach einem der Ansprüche 1 oder 2, **dadurch gekennzeichnet, dass** die Halteclipse (18) einen beweglichen Teil (20) aufweisen, der eine Abwinkelung (25) beinhaltet, die mit einer Rastnase (26) versehen ist, die es ermöglicht, in einen von einem feststehenden Teil (19) getragenen Schlitz (27) einzurasten.

4. Paneel (1) nach einem der vorhergehenden Ansprüche, **dadurch gekennzeichnet, dass** die Befestigungslaschen (17) an die Haut (3) mittels eines Haftmittels geklebt sind.

5. Paneel (1) nach einem der vorhergehenden Ansprüche, **dadurch gekennzeichnet, dass** die Befestigungslaschen (17) an die Haut (3) geschweißt sind.

6. Kraftfahrzeug, das ein Paneel (1) mit einem integrierten Leuchtelement nach den Ansprüchen 1 bis 5 umfasst.

## Claims

1. Motor vehicle panel (1) incorporating a lighting element, comprising:
- a skin (3) having an external face (5) oriented towards the outside of the vehicle and an opposite internal face (7) oriented towards the inside of the vehicle, said skin (3) having at least one window (9) allowing light to pass through;
- a light source (11) that is able to emit light rays and a fastening device for said light source (11), said fastening device (13) bearing against said internal face (7) so as to hold said light source (11) substantially facing said window (9), -said fastening device (13) also comprising a solid transparent portion (15), extending from said light source (11) as far as said skin (3) and passing through said window (9), the fastening device (13) also comprising fastening tabs (17) situated on either side of the light source (11), **characterized in that** the fastening device comprises holding clips (18) that are able to hold the light source (11) against the transparent portion (15) and **in that** the fastening tabs (17) and the holding clips (18) are distributed alternately over the entire length of the light source (11).

2. Panel (1) according to Claim 1, **characterized in that** the fastening device (13) and the transparent portion (15) are formed in a single piece.

3. Panel (1) according to either of Claims 1 and 2, **characterized in that** said holding clips (18) have a mobile part (20) having a return (25) provided with an attachment lug (26) allowing it to be fitted in a slot (27) borne by a fixed part (19).

4. Panel (1) according to one of the preceding claims, **characterized in that** the fastening tabs (17) are bonded to the skin (3) by means of an adhesive.

5. Panel (1) according to one of the preceding claims, **characterized in that** the fastening tabs (17) are welded to the skin (3).

6. Motor vehicle comprising the panel (1) incorporating a lighting element according to Claims 1 to 5.
